# EUROPEAN PATENT APPLICATION

(11) **EP 4 106 288 A1**
(43) Date of publication of application: **21.12.2022**
(21) Application number: 21180451.3
(22) Date of filing: 18.06.2021
(51) Int. Cl.: H04L 29/06

(54) **METHOD FOR MAKING A SOCIAL ENGINEERING ATTACK MORE DIFFICULT**

(71) Applicant: Deutsche Telekom AG, 53113 Bonn (DE)
(72) Inventor: Minow, Jascha, 64625 Bensheim (DE); El Mallouki, Said, 56329 St. Goar (DE); Platschek, Martin Michael, 12557 Berlin (DE)
(74) Representative: Braun-Dullaeus Pannen Emmerling Patent- & Rechtsanwaltspartnerschaft mbB

(57) **Abstract**

A Method and a system for making a social engineering attack more difficult are disclosed, whereby a provider registers queries for information on a person which can be retrieved via an internet platform, whereby predetermined classification models are used to automatically analyse whether the person could be the target of a social engineering search, and whereby the result of the analysis is provided as forecast data, the forecast data specifying a probability with which the person is the target of a social engineering search, certain forecast data triggering certain preventive measures for making an anticipated social engineering attack more difficult.

## Description

The invention relates to a method for making a social engineering attack more difficult, wherein a provider registers queries for information on a person which can be retrieved via an Internet platform. Furthermore, the invention relates to a system for carrying out the method.

Online fraud of all kinds is on the increase. For this purpose, the fraudsters use different methods, such as identity theft or phishing mails up to scareware. The fraudsters' methods are becoming more and more sophisticated and require a high degree of research and social engineering in order to be able to efficiently adapt the fraud scheme to the victims. To this end, the fraudsters use automatic and semi-automatic procedures to create the most suitable overall picture possible for their calls or the generation of messages addressed to the fraud victim. Often, common communication channels that are not suspicious for the victim, such as e-mails or messenger messages, are used for these messages. Queries on information about a person that can be retrieved via an internet platform are thus understood to be accesses to this information and/or searches for it.

Searching social media platforms such as Facebook, YouTube, Instagram, Twitter and others makes it possible nowadays to find a lot of information or data about a person online. The combination of data from different sources already provides a very good picture of the person, their preferences, friend circles, leisure activities, family status and much more. The public or semi-public posting of photos and videos as well as the sharing of location data in various forms, for example when checking in at a restaurant or similar, represents another valuable source of information for social engineering experts. By making a lot of information available digitally in embedded formats such as EXIF and Facebook Graph, this data can also be efficiently queried and evaluated automatically. The correlation of the collected information can thus be used very well to create detailed profiles. In some cases, this is possible entirely without human intervention. The use of so-called zero-day exploits in various services, both on the server and on the client side, may even enable the use of data deliberately shared only within a narrow circle or, in the worst case, even of non-public data.

With the information collected, only the targeting for the fraud scenarios mentioned can be optimised very well. The selection of target addresses for mailings, the generation of suitable phishing mails or messages using the available knowledge is no longer a problem for modern systems. As a result, attacks based on social engineering are becoming better and better in quality and persuasiveness. The ability to distinguish a phishing email from a real email requires more and more expertise and can overwhelm even experienced computer users. However, the use of the collected information is not only suitable for online fraud. The data is also highly sought after in telephone fraud or so-called doorstep fraud or even burglary offences. The probability of landing a "hit" is thus considerably increased and on the so-called dark web such data sets can be acquired for little money. The interested parties can optimise the data sets with various criteria for their respective purpose.

There are already various approaches to counter such online forms of fraud. For example, US 2018/0097836 shows measures for recognising and intervening in a social media attack that is already in progress. This includes connecting another person to the communication or preventing the fraudster from accessing certain data of the attacked person. The disadvantage of these solutions is that they can only take effect once an ongoing social media attack has been detected.

From US 2016/0234245, a method is known in which the transmission of contact data of a majority of the employees of a company is monitored and, if necessary, the identity information of the employees contained therein is replaced. The disadvantage of this solution is that it basically conceals identities, i.e. even if there is no risk of a social media attack.

This application sets itself the task of making a social media attack more difficult without impairing a person's communication or the presentation of information about that person. For this purpose, it proposes to detect the preparation of a social media attack in order to be able to take measures to make the attack more difficult or even to prevent it.

The task is solved with the method according to claim 1 and with the system according to claim 14. The claims dependent on claim 1 or 14 comprise some particularly preferred embodiments of the method or the system according to the invention. An essential basic idea of the invention is that, in a method according to the generic concept of claim 1, that predetermined classification models are used to automatically analyse whether the person could be the target of a social engineering search, and in that the result of the analysis is provided as forecast data, the forecast data specifying a probability with which the person is the target of a social engineering search, certain forecast data triggering certain preventive measures for making an anticipated social engineering attack more difficult. The system according to the invention comprises an interface to an Internet platform, a processing unit for analysing queries on information on a person retrievable via the Internet platform on the basis of at least one classification model, and an output unit for transmitting certain preventive measures for making an expected social engineering attack more difficult to the Internet platform.

Thus the invention automatically analyses on the basis of predetermined classification models whether the person could be the target of a social engineering search. The result of the analysis is provided as a forecast of the probability with which the person is the target of a social engineering search. As an effect, certain forecasts triggering certain preventive measures for making an expected social engineering attack at least more difficult.

According to this basic idea, making a social media attack more difficult can be solved on the provider side by centrally tracking the queries for persons and/or the accesses to all data on a person. Such a provider can be the operator of an internet platform, such as Facebook, Google or Deutsche Telekom. The tracking information is automatically evaluated or analysed according to certain criteria. These criteria form the basis of classification models, which are used to determine the probability of a person being the target of social engineering research. If there is a suspicion on the basis of the forecast data that a detailed profile of a person is to be created, certain preventive measures are triggered to make an expected social engineering attack more difficult.

The method or system according to the invention thus does not concern the detection of a social media attack that is already in progress. The starting point of the method and the system is rather that a social engineering attack requires good preparation. A social media search is detected, which can be the possible preparation for a social engineering attack. In this context, we only talk about potential perpetrators and potential victims. Detecting an attack in progress, i.e. recognising the communication required for this between a perpetrator and a victim, is not part of the procedure.

The procedure is particularly effective in a case of preparation of a so-called "spear fishing" attack. This form of social engineering attack requires a good assessment of the potential victim. Therefore, queries that can be executed anonymously are preferably included in the analysis, as well as searches carried out under a profil on various social media channels. This automated search can be compared to a person acting on their own, who searches for information about themselves and checks what they find.

In a first step, access to information about a person is collected. This can be the profiles of this person's accounts, as well as searches for characteristics that can lead to the account. Such access could be, for example, a search for a name on Facebook and/or on Linkedln. Starting from the hit list of the access, the next step would be to first retrieve all publically accessible information about this person. This includes the profile photo, contact information, if viewable, and other things that the person willingly shares with other users of the platform. To be able to do this, the person retrieving the information does not need to have been in contact with the person in any way.

It can also be checked whether such queries on the person's profile correlate with accesses to any posts the person may have made, e.g. in a Linkedln group, and with accesses to the profiles of the person's contacts and, if applicable, their activities.

Such accesses, such as searching by name, querying a CV, accessing the contact list, accessing contacts via the person's contact list, etc., are the criteria that are taken into account in classification models in order to calculate a probability for a background search on this person. Of course, it is advantageous to continuously optimise the weighting of the individual criteria. In artificial neural networks such as a DNN or a RNN, these vectors can be continuously adjusted to improve the detection of a potential social engineering search. It is therefore particularly advantageous to have the classification models administered by an artificial neural network. So-called honeypots can also be used to optimise the classification model. Such fake profiles serve to attract the attention of potential perpetrators. Of course, feedback from attacks that have actually been carried out also flow into the classification model, as does historical data in general, which is to be classified accordingly.

Individual layers with corresponding weighting of the individual features are used to differentiate between certain search patterns. Thus, one layer can specialise in the temporal sequence of all queries, while another layer specialises in the type of information, for example, names, pictures, friends list, etc., and a third layer in turn takes into account the quantity of queries in certain time windows, for example, at night between 0h and 6am In combination, the artificial neural network thus recognises different search patterns, whereby the combination of several criteria will probably lead to a higher weighting. However, it is in the nature of the artificial neural network that this cannot be predicted with certainty.

The key of the method is to distinguish between preparatory research for a social engineering attack, for example to prepare a spear fishing attack, and legitimate research, for example by head-hunters. Therein lies the strength of the classification model. Pattern recognition is explicitly trained with searches that suggest criminal intent. In the long term, this allows very precise statements to be made as to whether a search is legitimate or not. Legitimate searches can be ruled out by using the data from such a search to train the classification model with negative cases. After machine learning, the system according to the invention is able to perform the method autonomously, i.e. without human intervention.

It is advantageous if at least one of the following criteria of a classification model is used as a basis for the analysis.

Preferably, the frequency with which data on the person is searched for is analysed. This includes the frequency of queries and searches for the person, the name, the place of birth, the address or other data that can be related to a person. Furthermore, this criterion can be used to examine whether the retrievals take place over a short period of time and/or over a large amount of data on a person. Furthermore, it can be analysed whether the queries about a person can be represented in a sequence. Such a sequence could be used, for example, to scan all pictures from a picture gallery in order to analyse family relationships, or to correlate all entries in the Facebook check-ins in order to derive preferences of the person.

It is also beneficial to analyse the source of the queries to see if the source is related to the person. With regard to the origin of the queries, it can be analysed whether they come from the circle of friends (the so-called first level) or extended circle of friends (second level). If this is determined, then they will preferably only be included in the calculation with a correspondingly low weighting. Furthermore, it can be analysed whether they are enquiries from the "public" sector, i.e. without a traceable source. In this case, they are preferably given a high weighting in the classification model. If they are enquiries from the distant circle of acquaintances, i.e. simple followers, friends in the third or lower level as well as enquiries from known accounts, which are however not directly related to the person, they are preferably also rated highly.

It is also advantageous if the type of queries is analysed. One of the following queries should preferably be subsumed under this criterion. Are personal data, location data or images scanned? Is it a case of accessing the person's status page, or are further queries started afterwards? Were photos or videos retrieved? Do they contain location data? Were other references retrieved from the person by the same interrogator? It is particularly advantageous to analyse whether there is a connection between an activity of the person and the queries.

It is of particular advantage to analyse from which IP address range the queries originate. With this criterion, it is preferable to examine where the queries come from, in particular whether the query came from the country in which the person also lives. Other preferred questions in this context would be whether the queries come from certain IP address ranges that have already been associated with dubious practices. In particular, it is also of interest whether data on a plurality of persons are queried from the IP address range, especially from certain source addresses. This can be used to determine whether many such queries are concentrated on specific source addresses, but across many profiles.

In a preferred embodiment of the method, the timing of the queries is analysed, i.e. when the queries are made. For example, are they queries that follow a certain pattern predominantly at night at fixed times, indicating that the queries are automated? Alternatively or in addition to this, it is analysed whether the queries follow a known usage pattern among the users of the platform. This includes, for example, the usage pattern that people like to browse internet platforms in the morning during breakfast.

Preferably, a pattern recognition based on one of these criteria is trained with searches that suggest criminal intent and/or trained with data from a legitimate search.

At least one of these criteria is the basis for a prediction that uses one or more classification models to attempt to calculate predictive data about the likelihood of a person being the target of a social engineering search.

The calculated probability can then be used to take further action. Preferably, certain queries can be automatically blocked or delayed to make the analysis more difficult. The person can be informed accordingly of the prediction that he or she may currently be the focus of such a search. Preventive measures can be triggered, such as adapting a spam filter to certain special cases in order to secure the potential attack vector. The concrete design of the measures ultimately depends on the design of the preventive measures offered on the basis of the analysis.

Furthermore, in order to increase the hit rate, it can also be analysed across the board whether the predictions of the different providers correlate. Such boosting includes, for example, searches via Google, as well as Facebook and Linkedln queries. Preferably, this is a system that takes over the logging of relevant queries and can be filled across systems. The prognoses per target system are then used as input data in extended classification models in order to calculate a probability from all systems or across all systems.

Which preventive measures are taken in response to a particular forecast thus depends on a variety of factors. This can be a message that Linkedln sends to this person, for example, but also a block on access to certain data. If the probability is high, the security department of an internet platform or another provider can also be involved. This is particularly advantageous if many requests have been made from the same source to different people.

Since this must be done on the provider side, because the relevant data is only available there, the benefit of such a solution can be maximised by having different providers combine their tracking protocols and thus expand the evaluation to include accesses to more than one provider for the same person.

This can be done by anonymously storing the access data in a central system, in which all providers log the accesses in a comprehensive format. Thus, the evaluation can provide an even better picture of the actual threat globally across several providers.

In particular, this is advantageous because a sequence of received search hits can be detected. For example, a user of an internet platform whose information was increasingly searched for on Google, e.g. by means of a name search, subsequent opening of various hits, such as access to the Facebook page from the search results, further research there by means of the profile, could receive a higher probability in the analysis, since the queries extend over at least two different internet platforms and are directly related to each other. If other characteristics apply, such as a large number of further queries, parallel queries, etc., it can be relatively certain that the person has just been researched and that it is not a matter of normal queries.

## Claims

1. Method for making a social engineering attack more difficult, whereby a provider registers queries for information on a person which can be retrieved via an internet platform,
**characterized in,**
**that** predetermined classification models are used to automatically analyse whether the person could be the target of a social engineering search, and in that the result of the analysis is provided as forecast data, the forecast data specifying a probability with which the person is the target of a social engineering search, certain forecast data triggering certain preventive measures for making an anticipated social engineering attack more difficult.

2. Method according to claim 1,
**characterized in,**
**that** the frequency with which data on the person is searched for is analysed.

3. Method according to claim 1 or 2,
**characterized in,**
**that** a source of the queries is analysed to determine whether the source is related to the person.

4. Method according to one of the preceding claims,
**characterized in,**
**that** it is analysed from which IP address range the queries originate.

5. Method according to claim 4,
**characterized in,**
**that** it is analysed whether data on a plurality of persons are queried from the IP address range, in particular from specific source addresse.

6. Method according to one of the preceding claims,
**characterized in,**
**that** the type of the queries and/or the timing of the queries is analysed.

7. Method according to one of the preceding claims,
**characterized in,**
**that** it is analysed whether there is a connection between an activity of the person and the queries.

8. Method according to one of the preceding claims,
**characterized in,**
**that** pattern recognition is trained with searches that suggest criminal intent and/or is trained with data from a legitimate search.

9. Method according to one of the preceding claims,
**characterized in,**
**that** as a preventive measure to make the expected social engineering attack more difficult, the queries are delayed or blocked.

10. Method according to one of the preceding claims,
**characterized in,**
**that** as a preventive measure to make the expected social engineering attack more difficult, the person is informed about the prediction.

11. Method according to one of the preceding claims,
**characterized in,**
**that**, as a preventive measure for making the anticipated social engineering attack more difficult, the spam filter of the provider and/or the Internet platform is adjusted.

12. Method according to one of the preceding claims,
**characterized in,**
**that** the provider registers the queries for the retrievable data on a person from a plurality of Internet platforms and/or transmits the preventive measure to be taken to make the anticipated social engineering attack more difficult to a plurality of Internet platforms.

13. Method according to one of the preceding claims,
**characterized in,**
**that** the prediction data is analysed to determine whether it correlates with prediction data from other providers.

14. A system for performing a method according to any one of claims 1-14, comprising an interface to an internet platform, a processing unit for analysing queries on information on a person retrievable via the internet platform based on at least one classification model, and an output unit for transmitting to the internet platform certain preventive measures for making an expected social engineering attack more difficult.

15. System according to claim 14,
**characterized in,**
**that** the classification model is entered in an artificial neural network, in particular a DNN or a RNN.
